# EUROPEAN PATENT SPECIFICATION

(11) **EP 2 874 197 B1**
(45) Date of publication and mention of the grant of the patent: **18.10.2017**
(21) Application number: 14193296.2
(22) Date of filing: 14.11.2014
(51) Int. Cl.: H01M 2/02, H01M 2/04, H01M 2/26, H01M 10/0569, H01M 10/0585, H01M 10/0587, H01M 2/24

(54) **Battery design and method of assembly**
Batteriedesign und Zusammenbauverfahren
Conception de batterie et procédé d'assemblage

(30) Priority: 15.11.2013 US 201361904722 P
(43) Date of publication of application: 20.05.2015
(73) Proprietor: Saft Groupe S.A., 93170 Bagnolet (FR)
(72) Inventor: Duffield, Michael C., Jacksonville, FL 32259 (US); Bloss, Matthew, Jacksonville, FL 32216 (US); Marlid, Björn, Fleming Island, FL 32003 (US)
(74) Representative: Hirsch & Associés

(56) References cited:
- EP-A1- 2 355 203
- DE-A1-102011 088 637
- US-A- 3 253 962
- US-A1- 2011 236 750
- US-A1- 2012 171 525

## Description

### BACKGROUND OF THE INVENTION

### Field of the Invention

This present disclosure relates generally to a Lithium-Ion battery assembly, including without limitation, a monoblock battery assembly housing one or more Lithium-Ion electrode assemblies in a single sealed monoblock housing without individual metallic casings for each battery cell.

### Background

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Some conventional battery assemblies, including Lithium-Ion battery assemblies, include a plurality of electrochemical cells or battery cells mechanically connected together (e.g. bolted together) in a housing. Each battery cell in the housing has an individual metallic casing, and a connector such as a bus bar or similar element electrically coupling one battery cell to one more other battery cells in the housing. The bus bar connects to an electric terminal on an outer surface of the battery cell via welding or another mechanical attachment (e.g. a bolt or a screw). The metallic casing in these conventional battery assemblies hermetically seals each battery cell to prevent moisture from entering into the cell and to prevent electrolyte from escaping the cell by a leak or evaporation, for example. Lithium-Ion batteries, in particular, as compared to some other conventional battery assemblies, are sensitive to moisture introduction in the battery cell. These conventional battery assemblies are costly as each battery cell has an individual metallic casing. Further, connection between the battery cells may be bulky and prone to breakage or leakage between the connections.

DE 10 2011 088637 A1 discloses a monoblock battery assembly comprising:
- a housing with multiple, separate individually sealed, but electrically connected cavities, each cavity receiving an electrode assembly;
- an electrode assembly having at least one positive electrode, at least one negative electrode, one or more insulative sheets between the at least one positive electrode and the at least one negative electrode, and an outermost insulative layer which substantially encases the at least one positive electrode, the at least one negative electrode, and the one or more insulative sheets ;
- a cover sealingly attached to the housing;
- a bussing electrically connected to the at least one positive electrode and the at least one negative electrode of the electrode assembly.

### SUMMARY OF THE INVENTION

The present invention is defined by the subject-matter of independent claim 1 and independent claim 11 and provides a monoblock battery assembly which houses several electrode assemblies together in a sealed monoblock battery assembly casing without the need for each electrode assembly to have an individual metallic casing. With the aspects of this present invention, the battery assembly housing provides an integrated casing such that each electrode assembly is provided in an individual seal-tight cavity of the battery assembly casing.

Through the multiple embodiments, the battery assembly of this invention reduces the costs of materials and cost of assembly, and improves stability, water-tightness, and electrolyte-tightness. Example embodiments of this application may address one or more of the above identified issues. However, an embodiment of this application need not solve, address, or otherwise improve on existing technologies.

A first exemplary aspect of the present disclosure includes a monoblock battery assembly comprising :
- a housing with multiple, separate individually sealed, but electrically connected cavities, each cavity receiving an electrode assembly;
- said electrode assembly having at least one positive electrode, at least one negative electrode, one or more insulative sheets between the at least one positive electrode and the at least one negative electrode, and an outermost insulative layer which substantially encases the at least one positive electrode, the at least one negative electrode, and the one or more insulative sheets
- a cover sealingly attached to the housing; and
- bussings electrically connected to the at least one positive electrode and the at least one negative electrode of each electrode assembly, each bussing having a covered portion which is integrally molded, or over molded or injection molded with cover and exposed portions which extend outwardly from a surface of cover for connection to an electrode assembly and insertion into housing, the bussings interconnecting the electrode assemblies.

A second exemplary aspect of the present disclosure includes a method for making a monoblock battery assembly comprising the steps of:
a) providing a housing with multiple, separate individually sealed, but electrically connected cavities which are designed to house an electrode assembly;
b) providing electrode assemblies, each electrode assembly being obtained by:
   i) layering at least one positive electrode, at least one negative electrode, and one or more insulative sheets between the at least one positive electrode and the at least one negative electrode,
   ii) wrapping an insulative layer around the at least one positive electrode, at least one negative electrode, and the one or more insulative sheets to form an outermost insulative layer which substantially encases the at least one positive electrode, the at least one negative electrode, and the one or more insulative sheets to form an electrode assembly;
c) electrically connecting bussings to the electrode assemblies to form an electrode-bussing unit; each bussing having a covered portion which is integrally molded, or over molded or injection molded with a cover and exposed portions which extend outwardly from a surface of cover for connection to an electrode assembly and insertion into housing, the bussings interconnecting the electrode assemblies ;
d) simultaneously placing the electrode-bussing unit into the housing, such that each electrode assembly is simultaneously placed in a cavity of the housing and attaching the cover to the housing; and
e) sealing the cover to the housing.

### BRIEF DESCRIPTION OF THE DRAWINGS

In the following detailed description, reference will be made to the accompanying drawing(s), in which similar elements are designated with similar numerals. The aforementioned accompanying drawings show by way of illustration and not by way of limitation, specific example embodiments and implementations consistent with principles of an example embodiment. These implementations are described in sufficient detail to enable those skilled in the art to practice an example embodiment and it is to be understood that other implementations may be utilized and that structural changes and/or substitutions of various elements may be made without departing from the scope and spirit of an example embodiment. The following detailed description is, therefore, not to be construed in a limited sense.
FIG. 1 shows a perspective view of a monoblock battery assembly according to an exemplary embodiment;
FIG. 2A shows a partial cross-sectional view of an electrode assembly according to an exemplary embodiment;
FIG. 2B shows a perspective view of an electrode assembly used in the battery assembly according to an exemplary embodiment;
FIG. 3 shows a perspective view of a housing of the monoblock battery assembly according to an exemplary embodiment;
FIG. 4 shows a perspective view of a cover and bussing or bussings of the monoblock battery assembly accordingly to an exemplary embodiment;
FIG. 5 shows a perspective view of an electrode-bussing unit of the monoblock battery assembly according to an exemplary embodiment; and
FIG. 6 shows an exploded perspective view of a wound electrode assembly according to an exemplary embodiment.

### DETAILED DESCRIPTION OF THE INVENTION

Embodiments will be described below in more detail with reference to the accompanying drawings. The following detailed descriptions are provided to assist the reader in gaining a comprehensive understanding or the methods, appearances, and/or systems described herein and equivalent modifications thereof. Accordingly, various changes, modification, and equivalents of the methods, apparatuses, and/or systems described herein will be apparent to those of ordinary skill in the art. Moreover, descriptions of well-known functions and constructions may be omitted for increased clarity and conciseness.

The terms used in the description are intended to describe embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

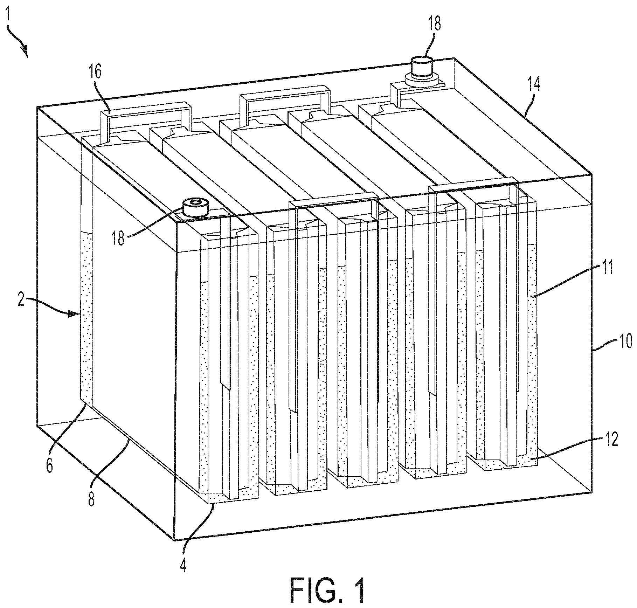

FIG. 1 shows a perspective view of an exemplary Lithium-Ion monoblock battery assembly 1. The monoblock battery assembly 1 generally includes a battery housing with multiple, separate individually sealed, but electrically connected cell compartments or cavities which are each designed to house an electrode assembly, electrolyte, and possibly interconnecting members or bussings. The cells or cell compartments in the monoblock battery assembly 1 may be connected in series or in parallel configuration.

As shown in FIG. 1, according to an exemplary embodiment, Lithium-Ion monoblock battery assembly 1 includes one or more electrode assemblies 2, a housing 10 having one or more cavities 12 for receiving one or more electrode assemblies 2, a cover 14, and a bussing or bussings 16 integral with cover 14. Cover 14 is sealed to housing 10. Each cavity 12 is individually sealed such that each electrode assembly 2 is provided in its respective individual seal-tight cavity 12. The structure of monoblock assembly 1 eliminates an individual metallic casing for each battery cell. In other words, the functionality of the metallic casings of battery cells in conventional battery assemblies is combined and integrated with the casing of monoblock battery assembly 1 of the present invention. A non-limiting embodiment of this invention, contemplates a Lithium-Ion monoblock battery assembly with one or more Lithium-Ion electrode assemblies.

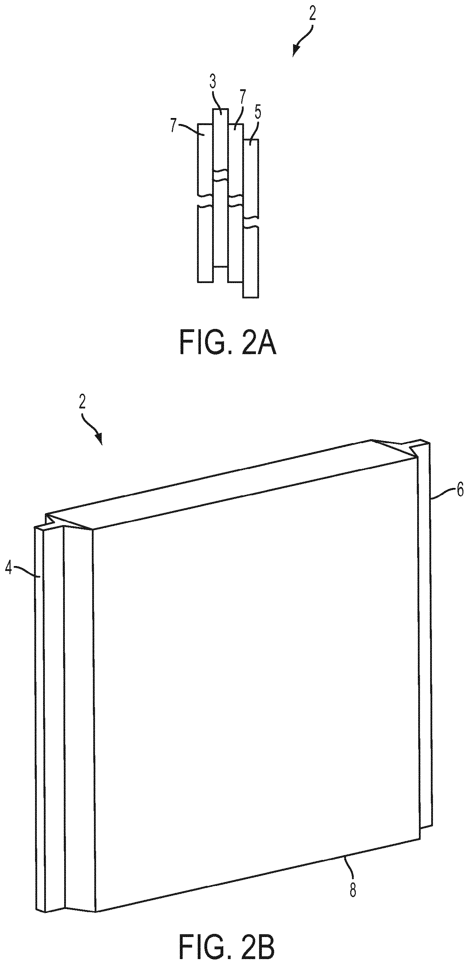

Monoblock battery assembly 1 has one or more electrode assemblies 2, and may include either a single assembly or multiple assemblies electrically connected in a series or parallel configuration. The structure and shape of electrode assembly 2 is not limiting and may for example, comprise a stacked or prismatic electrode assembly or a wound electrode assembly, commonly known as a jelly roll, as discussed below. As shown in FIG. 2A, each electrode assembly comprises one or more positive electrodes or cathode layers 3, one or more negative electrodes or anode layers 5, and one or more porous separator sheets or insulative sheets or layers 7 that are provided between positive and negative electrode layers to electrically isolate electrodes from each other.

As shown in a non-limiting embodiment in FIG. 2B, electrode assembly 2 may be a stacked electrode assembly which has a stack of electrode layers or sheets or substrate foils including one or more positive electrode layers 3, one or more insulative sheets 7, and one or more negative electrode layers 5. As shown in FIG. 2A, the separator sheets or insulative sheets 7 are provided between positive and negative electrode layers to electrically isolate electrodes from each other. Insulative sheets 7 may be made out of porous material, and/or may be made out of an insulative material, such as but not limited to, a thin-filmed polymer.

Each positive and negative electrode layer is substantially coated with an electrochemical active material leaving exposed edges of the positive and negative electrode layers. These exposed edges on the ends of the positive and negative electrode layers form positive electrode group 4 and negative electrode group 6 on opposite sides of electrode assembly 2 as shown in FIG. 2B.

For example, multiple positive electrode layers 3 or positive substrate foils and multiple negative electrode layers 5 or negative substrate foils may be stacked together and separated by insulative sheets 7. While each electrode layer is substantially coated with an electrochemical active material, the positive electrode layers 3 are left exposed on one end of the stack and the negative electrode sheets 5 are left exposed on another end of the stack. The exposed ends of the positive electrode layers 3 are grouped together to form a positive electrode group 4 and the exposed ends of the negative electrode layers 5 are grouped together to form a negative electrode group 6 on an opposite end as the positive electrode group 4.

As shown in FIG. 2B, each electrode assembly 2 includes an outermost insulative layer 8 which wraps around the stack or layers of positive electrodes layers 3, negative electrodes layers 5, and separator sheets or insulative sheets 7 to substantially encase the stack of positive electrode layers 3, negative electrode layers 5, and insulative sheets 7. In a non-limiting embodiment, outermost layer 8 may be made out of an insulative material, a thin-filmed polymer or the same material as the separator sheets or insulative sheets 7.

While electrode assembly 2 is shown as being provided as having a generally square shape, according to other exemplary embodiments, electrode assembly 2 may have a different configuration (e.g. an oval, circle, rectangular, or cylindrical cross-sectional shape).

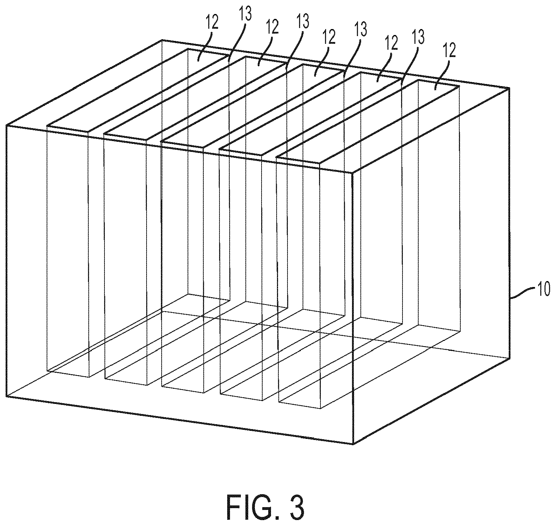

FIG. 3 shows housing 10 of monoblock battery assembly 1. Housing 10 is injection molded and has one or more cavities 12 for receiving one or more electrode assemblies 2. As shown in FIG. 3 each cavity 12 has a bottom wall, front and rear walls, two side walls, and an opening for receiving electrode assembly 2. As shown in a non-limiting embodiment of FIG. 3, housing 10 is divided into five cavities 12 by cavity divider walls 13. The number, shape, or size of one or more cavities 12 in the housing 10 is not limiting. In a non-limiting embodiment, one or more cavities 12 are shaped and sized to fit one or more electrode assemblies 2, and the number of cavities 12 corresponds to the number of electrode assemblies 2. It is also contemplated that the number of cavities 12 and the number of electrode assemblies 2 differ from each other, or that more than one electrode assembly 2 may be disposed in a single cavity 12.

In addition to each cavity 12 holding an electrode assembly 2 each cavity 12 also holds electrolyte 11 (shown in FIG. 1). Electrolyte 11 is any electrolyte commonly used in lithium-ion batteries, for example but not limited to, ethylene carbonate, dimethyl carbonate, and diethyl carbonate, an electrolyte with lithium salts in an organic solvent, or another similar solution. Cavities 12 are separated from each other by cavity side walls 13 and are individually sealed with cover 14 such that electrolyte 11 does not pass in between cavities 12.

Housing 10 is preferably made from a polymer material. In a non-limiting embodiment, the polymer material has a low electrolyte and moisture permeation rate. That is, the material of housing 10 is resistant to electrolyte 11, such that electrolyte 11 does not pass in between cavities 12 and does not escape monoblock battery assembly 1. In addition, the material of housing 10 has a low moisture permeability such that once monoblock battery assembly 1 is sealed, moisture is restricted or limited from entering and/or leaving monoblock battery assembly 1. In addition, housing 10 may be made of a low-cost material of high mechanical strength which is weldable and injection moldable. Examples of materials include: polypropylene or polyphenylene sulfide.

In one preferred embodiment, the monoblock battery assembly is a Lithium-Ion battery assembly. It comprises an electrolyte comprising an organic solvent, preferably selected from the group consisting of cyclic carbonates, linear carbonates, alkyl esters, ethers, lactones, nitriles and mixtures thereof. The housing is made from a polymer material.

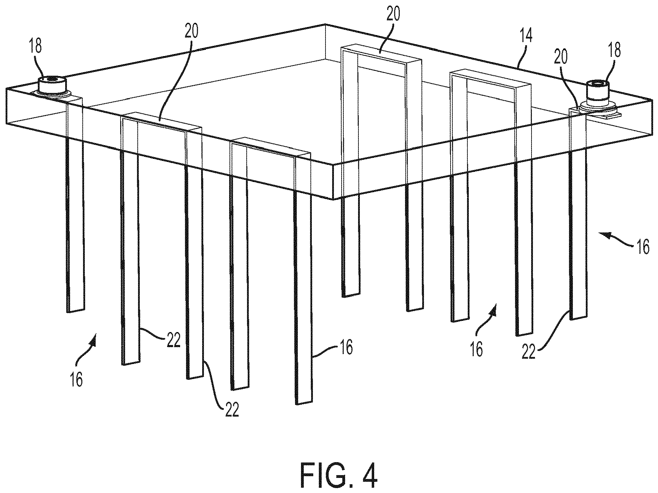

Monoblock battery assembly 1 also includes a cover 14 with a bussing or bussings 16 integrally molded thereto as shown in FIG. 4. As shown in FIG. 4, cover 14 is integrally molded over six bussings 16; however, the number of bussings is not limiting. Each bussing 16 has a covered portion 20 which is integrally molded, over molded or injection molded with cover 14 and exposed portions 22 which extend outwardly from a surface of cover 14 for connection to an electrode assembly and insertion into housing 10. For example, as shown in FIG. 4, bussing 16 has exposed portions 22 which extend downwardly from a lower surface of cover 14. The orientation of the bussing and the cover is not limiting. For example, if a cover was placed on the bottom of the housing, the bussing could similarly extend upwardly from an upper surface of cover 14 into a housing. As shown in FIG. 4, a bussing 16 may have one or two exposed portions 22 extending from covered portion 20.

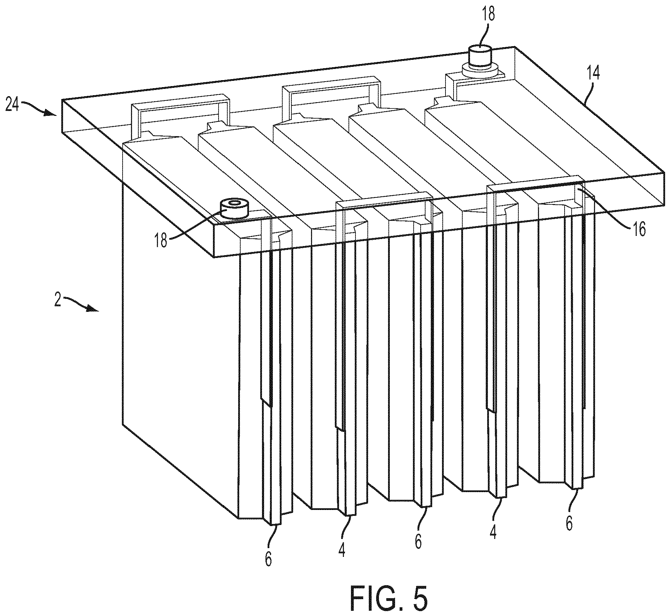

The exposed portions 22 of each bussing 16 extend from cover 14 a sufficient length to attach to and electrically connect to one or more of the electrode assemblies 2 as shown in FIG. 5. FIG. 5 shows a plurality of electrode assemblies 2 arranged in an alternating manner so that the positive and negative electrodes are alternately provided on each side of monoblock battery assembly 1. As shown in FIG. 5, positive electrode groups 4 and/or negative electrode groups 6 of electrode assemblies 2 are welded or otherwise electrically connected to exposed portions 22 of the bussings 16 to electrically interconnect the positive and negative electrode groups of adjacent assemblies. For example, as shown in FIG. 5, an exposed portion 22 of one bussing 16 is connected to a positive electrode group 4 of one electrode assembly 2 and another exposed portion 22 of the same bussing 16 is connected to a negative electrode group 6 of an adjacent electrode assembly 2. As noted above, the electrode assemblies 2 may be electrically connected in a parallel or series configuration. Each electrode assembly 2 may be welded to bussing or bussings 16, for example, via ultrasonic welding, spot welding, laser welding. Instead of or in addition to welding, electrode assembly 2 maybe mechanically coupled to bussing or bussings 16, for example, via a rivet or bolt. As shown in FIG. 5, cover 14, bussings 16 and electrode assemblies 2 together form an electrode-bussing unit or assembly 24 which is capable of being inserted into and attached to housing 10 together as a single unit, and also is capable of being removable together as a single unit therefrom. Thus, each electrode assembly 2 along with cover 14 and bussings 16 may be simultaneously inserted into housing 10.

An exterior surface of cover 14 also includes at least one terminal 18 for electrical connection outside of monoblock battery assembly 1. In the embodiment shown in FIG. 5, there are two terminals 18 corresponding to a positive terminal and a negative terminal. The at least one terminal 18 is electrically connected or connected by some other means to bussing or bussings 16. For example, a portion of bussing 16 connected to positive electrode group 4 is fixed to a positive terminal 18. In a non-limiting embodiment, cover 14 is injection molded with the same material as housing 10; however, it is also contemplated that housing 10 and cover 14 are made of different materials. Similar to housing 10, cover 14 is made of a polymer or other material which has a low electrolyte and moisture permeation rate.

As shown in FIG. 1, electrode-bussing unit 24 is attached and sealed to housing 10 forming a sealed and leak-proof monoblock battery assembly 1. Cover 14 having one or more bussings 16 integrally molded therewith and one or more electrode assemblies 2 attached thereto forms a seal-tight compartment or container for each electrode assembly. That is, in a non-limiting embodiment, a seal is formed between a lower surface of cover 14 and an upper surface of each wall of cavity 12. According to an exemplary embodiment, an electrolyte 11 is included within each cavity 12 along with electrode assembly 2. Each cavity 12 is separated, isolated, and leak-proof from the other cavities. That is, electrolyte must be inserted into each cavity 12, as cavities 12 are not in fluid communication with one another. As discussed in more detail below, in a non-limiting embodiment, electrolyte may be added to each cavity 12 after the electrode-bussing unit 24 is inserted into housing 10, but before cover 14 is sealed to housing 10. Cavity 12 along with cover 14 individually seals each electrode assembly 2 and electrolyte 11 in an individual compartment or container. Thus, the need for an additional metallic casing of a battery cell is eliminated as the monoblock battery assembly 1 interconnects electrode assemblies 2 by providing a bussing or bussing 16 integral with cover 14 and provides a separate casing for each electrode assembly 2 and electrolyte as well as a single sealed casing for monoblock battery assembly 1.

Features of monoblock battery assembly 1 such as providing bussing or bussings 16 and terminal 18 molded into cover 14, sealing electrode-bussing unit 24 to the housing 10, and/or providing individual leak tight cavities for one or more electrode assemblies 2 reduces leaks of monoblock battery assembly 1. For example, leak path in between cavities and to the outside is reduced as compared to conventional battery assemblies with interconnections between cells each having individual metallic casings.

A method for making monoblock battery assembly 1 is described below. As discussed above, positive electrode layers 3, negative electrode layers 5, and insulative sheets 7 are stacked together in an alternating pattern. The one or more insulative sheets 7 are provided intermediate or between the positive and negative electrodes to electrically isolate the electrodes from each other. An outermost insulative layer 8 is wrapped around the positive electrode layers 3, negative electrode layers 5, and insulative sheets 7 to substantially encase the stack of positive electrode layers 3, negative electrode layers 5, and insulative sheets 7 and form electrode assembly 2. As shown in FIG. 5, one or more electrode assemblies 2 are electrically connected and physically attached to exposed portion(s) 22 of bussing or bussings 16 which are provided integral with cover 14. In a non-limiting embodiment, bussing or bussings 16 is injection molded to cover 14. As noted above, a monoblock battery assembly 1 having more than one electrode assembly may be connected in a series or parallel configuration. One or more electrode assemblies 2 are not limited to the order or arrangement as shown in FIG. 5.

After one or more electrode assemblies 2 of monoblock battery assembly 1 are connected to the bussing or bussings 16 and cover 14, forming electrode-bussing unit 24, electrode-bussing unit 24 is inserted into cavities 12 of housing 10 such that each electrode assembly 2 is simultaneously entered into housing 10. Cavities 12 may be filled with electrolyte 11 after insertion of the electrode assembly 2, but before cover 14 is sealed to housing 10. In a non-limiting embodiment, each cavity 12 of housing 10 is sized to receive a single electrode assembly 2. Electrode-bussing unit 24 is placed into housing 10 and cover 14 is attached and sealed to housing 10. Cover 14 and housing 10 may be attached and sealed by a variety of means including, laser welding, vibration welding, thermal welding or using a solvent bond. Monoblock battery assembly 1 is then electrically formed and charged. With cover 14 and housing 10 joined, a sealed container housing an electrode assembly 2 is created in each cavity 12 between walls of cavity 12 and cover 14 as shown in FIG. 1.

While electrolyte 11 may be inserted into cavity 12 after insertion of the electrolyte assembly 2, it is also contemplated that electrolyte 11 is introduced into each cavity 12 through an opening (not shown) in housing 10 or cover 14 after cover 14 is sealed to housing 10. In this embodiment, the opening is sealed after filing of electrolyte. In addition, the electrolyte 11 may be inserted into cavity 12 prior to insertion of electrode-bussing unit 24.

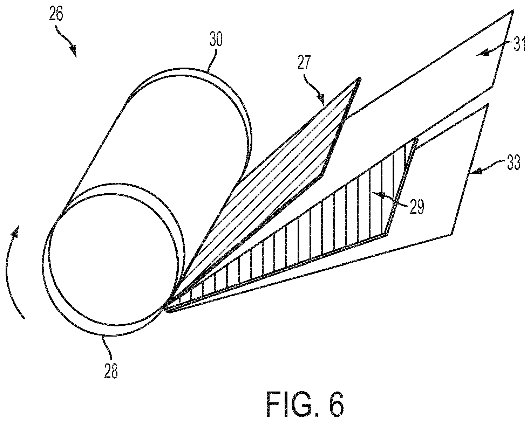

As discussed above, in addition to a stacked electrode assembly shown in FIG. 2, a wound electrode assembly 26 or jelly-roll electrode may also be used as shown in FIG. 6. The embodiment shown in FIG. 6 is similar to the embodiments discussed above, except that a wound electrode assembly is used as opposed to stack or prismatic electrode assembly discussed above. In all other aspects this embodiment is the same as those discussed above. A wound electrode assembly 26 includes one or more positive electrode layers 27, one or more negative electrode layers 29, and one or more separator sheets or insulative sheets 31 which are stacked together in an alternating pattern and wrapped (i.e. in direction of arrow) around a winding core as shown in FIG. 6. The one or more insulative sheets 31 are provided intermediate or between the positive and negative electrode layers to electrically isolate the electrodes from each other. Similar to electrode assembly 2 described above, wound electrode assembly 26 has a positive electrode group 28 and negative electrode group 30 on opposite ends of wound electrode assembly 26. Further, each wound electrode assembly 26 includes an outermost insulative layer 33 which wraps around the layers of positive electrodes layers 27, negative electrodes layers 29, and insulative sheets 31 to substantially encase the positive electrode layers 27, negative electrode layers 29, and insulative sheets 31. A wound electrode assembly is similarly inserted directly into a cavity in a housing and electrically connects to a bussing or bussings integral with a cover.

While embodiments of this application refer to Lithium-Ion battery assemblies, the invention is not limited to Lithium-Ion batteries and could be used in other battery assemblies that would be obvious to one or ordinary skill in the art. Further, while embodiments of this application discuss the cover being placed over or on top of the housing, the orientation of the battery assembly is not limiting, and the battery assembly could take any orientation (such as having a removable cover on the bottom or the side of the housing) as obvious to one of ordinary skill in the art.

Although a few example embodiments have been shown and described, these example embodiments are provided to convey the subject matter described herein to people who are familiar with this field. It should be understood that the subject matter described herein may be embodied in various forms without being limited to the described example embodiments. The subject matter described herein can be practiced without those specifically defined or described matters or with other or different elements or matters not described. It will be appreciated by those familiar with this field that changes may be made in these example embodiments without departing from the subject matter described herein as defined in the appended claims and their equivalents. Further, any description of structural arrangement of components or relationship there between is merely for explanation purposes and should be used to limit an example embodiment.

Aspects related to the example embodiment have been set forth in part in the description above, and in part should be apparent from the description, or may be learned by practice of embodiments of the application. Aspects of the example embodiment may be realized and attained using the elements and combinations of various elements and aspects particularly pointed out in the foregoing detailed description and the appended claims. It is to be understood that both the foregoing descriptions are an example and are explanatory only and are not intended to be limiting.

## Claims

1. A monoblock battery assembly (1) comprising:
a housing (10) with multiple, separate individually sealed, but electrically connected cavities (12), each cavity receiving an electrode assembly;
said electrode assembly (2) having at least one positive electrode (3), at least one negative electrode (5), one or more insulative sheets (7) between the at least one positive electrode and the at least one negative electrode, and an outermost insulative layer (8) which substantially encases the at least one positive electrode, the at least one negative electrode, and the one or more insulative sheets;
a cover (14) sealingly attached to the housing; and
bussings (16) electrically connected to the at least one positive electrode and the at least one negative electrode of each electrode assembly, each bussing having a covered portion (20) which is integrally molded, or over molded or injection molded with the cover (14) and exposed portions (22) which extend outwardly from a surface of the cover (14) for connection to an electrode assembly and insertion into housing (10), the bussings interconnecting the electrode assemblies.

2. The monoblock battery assembly as claimed in claim 1, wherein the monoblock battery assembly (1) is a Lithium-Ion battery assembly.

3. The monoblock battery assembly as claimed in claim 2, comprising an electrolyte comprising an organic solvent selected from the group consisting of cyclic carbonates, linear carbonates, alkyl esters, ethers, lactones, nitriles and mixtures thereof.

4. The monoblock battery assembly as claimed in any of the preceding claims,
wherein the outermost insulative layer (8) is the same material as the one or more insulative sheets (7).

5. The monoblock battery assembly as claimed in any of the preceding claims,
wherein the outermost insulative layer (8) is a polymer.

6. The monoblock battery assembly as claimed in any of the preceding claims,
wherein the battery assembly has at least one terminal (18) on an exterior surface of the cover (14) connected to the bussing (16) inside the battery assembly with the cover sealing attached to the housing.

7. The monoblock battery assembly as claimed in any of the preceding claims,
wherein the housing (10) and the cover (14) are made of a polymer material.

8. The monoblock battery assembly as claimed in any of the preceding claims,
wherein the bussing extends downwardly (22) from the cover (14) for attachment to the electrode assembly (2).

9. The monoblock battery assembly as claimed in any of the preceding claims,
wherein the electrode assembly (2) is sealed in the cavity (12) as a result of the cover (14) being sealingly attached to the housing (10).

10. The monoblock battery assembly as claimed in any of the preceding claims,
wherein the electrode assembly (2) consists of: the at least one positive electrode (3), the at least one negative electrode (5), the one or more insulative sheets (7) between the at least one positive electrode and the at least one negative electrode, and the outermost insulative layer (8).

11. A method for making a monoblock battery assembly (1) comprising the steps of:
a) providing a housing (10) with multiple, separate individually sealed, but electrically connected cavities (12) which are designed to house an electrode assembly;
b) providing electrode assemblies, each electrode assembly being obtained by:
i) layering at least one positive electrode (3), at least one negative electrode (5), and one or more insulative sheets (7) between the at least one positive electrode and the at least one negative electrode,
ii) wrapping an insulative layer (8) around the at least one positive electrode, at least one negative electrode, and the one or more insulative sheets to form an outermost insulative layer which substantially encases the at least one positive electrode, the at least one negative electrode, and the one or more insulative sheets to form an electrode assembly (2);
c) electrically connecting bussings (16) to the electrode assemblies to form an electrode-bussing unit (24); each bussing having a covered portion which is integrally molded, or over molded or injection molded with a cover (14) and exposed portions (22) which extend outwardly from a surface of the cover (14) for connection to an electrode assembly and insertion into housing (10), the bussings interconnecting the electrode assemblies ;
d) simultaneously placing the electrode-bussing unit into the housing (10), such that each electrode assembly is simultaneously placed in a cavity (12) of the housing and attaching the cover (14) to the housing; and
e) sealing the cover to the housing.

12. The method of making the monoblock battery assembly as claimed in any of claim 10 or 11, wherein the battery assembly (2) has at least one terminal (18) on an exterior surface of the cover (14) connected to the bussing inside the battery assembly with the cover sealing attached to the housing (10).

13. The method of making the monoblock battery assembly as claimed in any of claims 10-12, wherein the bussing extends downwardly (22) from the cover (14) for attachment to the electrode assembly (2).

## Patentansprüche

1. Eine Monoblock-Batterieanordnung (1), umfassend:
- ein Gehäuse (10) mit mehreren separaten, einzeln versiegelten aber elektrisch verbundenen Hohlräumen (12), wobei jeder Hohlraum eine Elektrodenanordnung aufnimmt;
- wobei die Elektrodenanordnung (2) mindestens eine positive Elektrode (3), mindestens eine negative Elektrode (5), eine oder mehrere isolierende Folien (7) zwischen der mindestens einen positiven Elektrode und der mindestens einen negativen Elektrode und eine äußerste isolierende Schicht (8) aufweist, die im Wesentlichen die mindestens eine positive Elektrode, die mindestens eine negative Elektrode und die eine oder mehreren isolierenden Folien umschließt;
- eine Abdeckung (14), die abdichtend an dem Gehäuse angebracht ist; und
- Busstrukturen (16), die mit der mindestens einen positiven Elektrode und der mindestens einen negativen Elektrode jeder Elektrodenanordnung elektrisch verbunden sind, wobei jede Busstruktur einen bedeckten Abschnitt (20) aufweist, welcher mit der Abdeckung (14) einstückig geformt, überformgepresst oder spritzgegossen ist, und freiliegende Abschnitte (22), die sich zur Verbindung an eine Elektrodenanordnung und zum Einsetzen in das Gehäuse (10) von einer Oberfläche der Abdeckung (14) nach außen erstrecken, wobei die Busstrukturen die Elektrodenanordnungen miteinander verbinden.

2. Die Monoblock-Batterieanordnung nach Anspruch 1, wobei die Monoblock-Batterieanordnung (1) eine Lithium-Ionen-Batterieanordnung ist.

3. Die Monoblock-Batterieanordnung nach Anspruch 2, umfassend ein Elektrolyt, welches ein organisches Lösungsmittel umfasst, ausgewählt aus der Gruppe bestehend aus cyclischen Carbonaten, linearen Carbonaten, Alkylestern, Ethern, Lactonen, Nitrilen und deren Mischungen.

4. Die Monoblock-Batterieanordnung nach einem der vorangehenden Ansprüche, wobei die äußerste isolierende Schicht (8) aus dem gleichen Material besteht wie die einen oder mehreren isolierenden Folien (7).

5. Die Monoblock-Batterieanordnung nach einem der vorangehenden Ansprüche, wobei die äußerste isolierende Schicht (8) ein Polymer ist.

6. Die Monoblock-Batterieanordnung nach einem der vorangehenden Ansprüche, wobei die Batterieanordnung mindestens einen Anschluss (18) auf einer äußeren Fläche der Abdeckung (14) aufweist, der mit der Busstruktur (16), innerhalb der Batterieanordnung verbunden ist, wobei die Deckversiegelung an dem Gehäuse befestigt ist.

7. Die Monoblock-Batterieanordnung nach einem der vorangehenden Ansprüche, wobei das Gehäuse (10) und die Abdeckung (14) aus einem Polymermaterial bestehen.

8. Die Monoblock-Batterieanordnung nach einem der vorangehenden Ansprüche, wobei sich die Busstruktur, zu deren Anbringung an die Elektrodenanordnung, von der Abdeckung (14) aus nach unten erstreckt (22).

9. Die Monoblock-Batterieanordnung nach einem der vorangehenden Ansprüche, wobei die Elektrodenanordnung (2) in dem Hohlraum (12) versiegelt ist, dadurch dass die Abdeckung (14) versiegelt an dem Gehäuse (10) befestigt ist

10. Die Monoblock-Batterieanordnung nach einem der vorangehenden Ansprüche, wobei die Elektrodenanordnung (2) aus: der mindestens einen positiven Elektrode (3), der mindestens einen negativen Elektrode (5), der einen oder mehreren isolierenden Folien (7) zwischen der mindestens einen positiven Elektrode und der mindestens einen negativen Elektrode, und der äußersten isolierenden Schicht (8) besteht.

11. Ein Verfahren zur Herstellung einer Monoblock-Batterieanordnung (1), welches folgende Schritte umfasst:
a) Bereitstellen eines Gehäuses (10) mit mehreren separaten, einzeln versiegelten aber elektrisch verbundenen Hohlräumen (12) die zur Aufnahme einer Elektrodenanordnung ausgebildet sind;
b) Bereitstellen von Elektrodenanordnungen, wobei jede Elektrodenordnung erhalten wird durch:
i) Aufschichten von mindestens einer positiven Elektrode (3), mindestens einer negativen Elektrode (5) und einer oder mehreren isolierenden Folien (7) zwischen der mindestens einen positiven Elektrode und der mindestens einen negativen Elektrode,
ii) Wickeln einer isolierenden Schicht (8) um die mindestens eine positive Elektrode, die mindestens eine negative Elektrode und die eine oder mehreren isolierenden Folien, um eine äußerste isolierende Schicht zu bilden, die im Wesentlichen die mindestens eine positive Elektrode, die mindestens eine negative Elektrode und die eine oder mehreren isolierenden Folien umschließt, um eine Elektrodenanordnung (2) zu bilden;
c) elektrische Verbindung der Busstruktur (16) mit den Elektrodenanordnungen, um eine Elektroden-Busstruktur-Einheit (24) zu bilden, wobei jede Busstruktur einen bedeckten Abschnitt aufweist, welcher mit der Abdeckung (14) einstückig geformt, überformgepresst oder spritzgegossen ist, und freiliegende Abschnitte (22), die sich zur Verbindung an eine Elektrodenanordnung und zum Einsetzen in das Gehäuse (10) von einer Oberfläche der Abdeckung (14) aus nach außen erstrecken, wobei die Busstrukturen die Elektrodenanordnungen miteinander verbinden;
d) gleichzeitiges Einsetzen der Elektroden-Busstruktur in das Gehäuse (10), so dass jede Elektrodenanordnung gleichzeitig in einen Hohlraum (12) des Gehäuses eingesetzt wird, und Befestigen der Abdeckung (14) an das Gehäuse; und
e) Versiegelung der Abdeckung an das Gehäuse

12. Das Verfahren zur Herstellung einer Monoblock-Batterieanordnung nach Ansprüchen 10 oder 11, wobei die Batterieanordnung mindestens einen Anschluss (18) auf einer äußeren Fläche der Abdeckung (14) aufweist, der mit der Busstruktur (16), innerhalb der Batterieanordnung verbunden ist, wobei die Deckversiegelung an dem Gehäuse befestigt ist.

13. Das Verfahren zur Herstellung einer Monoblock-Batterieanordnung nach Ansprüchen 10 bis 12, wobei sich die Busstruktur, zu dessen Anbringung an die Elektrodenanordnung (2), von der Abdeckung (14) aus nach unten erstreckt (22).

## Revendications

1. Assemblage de batterie monobloc (1) comprenant :
un boîtier (10) avec de multiples cavités (12) séparées, scellées individuellement mais connectées électriquement, chaque cavité recevant un assemblage d'électrodes ;
ledit assemblage d'électrodes (2) ayant au moins une électrode positive (3), au moins une électrode négative (5), une ou plusieurs feuilles isolantes (7) entre la au moins une électrode positive et la au moins une électrode négative, et une couche isolante extérieure (8) qui enferme pratiquement la au moins une électrode positive, la au moins une électrode négative, et les une ou plusieurs feuilles isolantes ;
un capot (14) attaché de façon étanche au boîtier ; et
des bus (16) connectés électriquement à la au moins une électrode positive et à la au moins une électrode négative de chaque assemblage d'électrodes, chaque bus ayant une partie recouverte (20) qui est moulée d'une seule pièce, ou surmoulée ou moulée par injection avec le capot (14), et
des parties exposées (22) qui s'étendent vers l'extérieur à partir d'une surface du capot (14) pour une connexion à un assemblage d'électrodes et une insertion dans le boîtier (10), les bus interconnectant les assemblages d'électrodes.

2. Assemblage de batterie monobloc selon la revendication 1, lequel assemblage de batterie monobloc (1) est un assemblage de batterie au lithium-ion.

3. Assemblage de batterie monobloc selon la revendication 2, comprenant un électrolyte comprenant un solvant organique choisi dans le groupe constitué par les carbonates cycliques, les carbonates linéaires, les esters alkyliques, les éthers, les lactones, les nitriles et leurs mélanges.

4. Assemblage de batterie monobloc selon l'une quelconque des revendications précédentes, dans lequel la couche isolante extérieure (8) est du même matériau que les une ou plusieurs feuilles isolantes (7).

5. Assemblage de batterie monobloc selon l'une quelconque des revendications précédentes, dans lequel la couche isolante extérieure (8) est un polymère.

6. Assemblage de batterie monobloc selon l'une quelconque des revendications précédentes, lequel assemblage de batterie a au moins une borne (18) sur une surface extérieure du capot (14) connectée au bus (16) à l'intérieur de l'assemblage de batterie, le scellement du capot étant attaché au boîtier.

7. Assemblage de batterie monobloc selon l'une quelconque des revendications précédentes, dans lequel le boîtier (10) et le capot (14) sont faits en un matériau polymère.

8. Assemblage de batterie monobloc selon l'une quelconque des revendications précédentes, dans lequel le bus s'étend vers le bas (22) à partir du capot (14) pour un attachement à l'assemblage d'électrodes (2).

9. Assemblage de batterie monobloc selon l'une quelconque des revendications précédentes, dans lequel l'assemblage d'électrodes (2) est scellé dans la cavité (12) en résultat de l'attachement étanche du capot (14) au boîtier (10).

10. Assemblage de batterie monobloc selon l'une quelconque des revendications précédentes, dans lequel l'assemblage d'électrodes (2) consiste en : la au moins une électrode positive (3), la au moins une électrode négative (5), les une ou plusieurs feuilles isolantes (7) entre la au moins une électrode positive et la au moins une électrode négative, et la couche isolante extérieure (8).

11. Procédé pour former un assemblage de batterie monobloc (1), comprenant les étapes consistant à :
a) disposer d'un boîtier (10) avec de multiples cavités (12) séparées, scellées individuellement mais connectées électriquement, qui sont conçues pour loger un assemblage d'électrodes ;
b) disposer d'assemblages d'électrodes, chaque assemblage d'électrodes étant obtenu par :
i) stratification d'au moins une électrode positive (3), d'au moins une électrode négative (5), et d'une ou plusieurs feuilles isolantes (7) entre la au moins une électrode positive et la au moins une électrode négative,
ii) enveloppement d'une couche isolante (8) autour de la au moins une électrode positive, de la au moins une électrode négative, et des une ou plusieurs feuilles isolantes pour que soit formée une couche isolante extérieure qui enferme pratiquement la au moins une électrode positive, la au moins une électrode négative, et les une ou plusieurs feuilles isolantes pour que soit formé un assemblage d'électrodes (2) ;
c) connecter électriquement des bus (16) aux assemblages d'électrodes pour que soit formée une unité d'électrodes-bus (24) ; chaque bus ayant une partie recouverte qui est moulée d'une seule pièce, ou surmoulée ou moulée par injection avec un capot (14) et des parties exposées (22) qui s'étendent vers l'extérieur depuis une surface du capot (14) pour une connexion à un assemblage d'électrodes et une insertion dans le boîtier (10), les bus interconnectant les assemblages d'électrodes ;
d) simultanément placer l'unité d'électrodes-bus dans le boîtier (10), de façon que chaque assemblage d'électrodes soit simultanément placé dans une cavité (12) du boîtier, et attacher le capot (14) au boîtier ; et
e) sceller le capot au boîtier.

12. Procédé pour former un assemblage de batterie monobloc selon l'une quelconque des revendications 10 et 11, dans lequel l'assemblage de batteries (2) a une borne (18) sur une surface extérieure du capot (14) connectée au bus à l'intérieur de l'assemblage de batterie, le scellement de capot étant attaché au boîtier (10).

13. Procédé pour former un assemblage de batterie monobloc selon l'une quelconque des revendications 10 à 12, dans lequel le bus s'étend vers le bas (22) depuis le capot (14) pour un attachement à l'assemblage d'électrodes (2).
